# FASCICULE DE BREVET EUROPEEN

(11) **EP 2 618 704 B1**
(45) Date de publication et mention de la délivrance du brevet: **05.08.2015**
(21) Numéro de dépôt: 11771220.8
(22) Date de dépôt: 19.09.2011
(51) Int. Cl.: A47J 31/057

(54) **APPAREIL ELECTROMENAGER A RESERVOIR PROTEGE**
ELEKTRISCHES HAUSHALTSGERÄT MIT GESCHÜTZTEM TANK
ELECTRIC HOUSEHOLD APPLIANCE HAVING A PROTECTED TANK

(30) Priorité: 24.09.2010 FR 1057733
(43) Date de publication de la demande: 31.07.2013
(73) Titulaire: SEB S.A., 69130 Ecully (FR)
(72) Inventeur: DUMOUX, Philippe, F-21120 Gemeaux (FR); LARCHER, Christian Henri Louis, F-72190 Sarge Les Le Mans (FR)
(74) Mandataire: Novagraaf Technologies
(86) Numéro de dépôt international: PCT/FR2011/052144
(87) Numéro de publication internationale: WO 2012/038649

(56) Documents cités:
- FR-A- 1 495 922
- FR-A- 1 529 333
- US-A- 3 570 390
- US-A1- 2006 112 832

## Description

L'invention concerne un appareil électroménager de préparation de boisson comportant un réservoir à liquide pourvu d'un orifice de remplissage et relié à un conduit apportant le liquide vers l'ouverture d'un porte-filtre adapté à recevoir intérieurement un filtre où on place un produit de préparation de la boisson.

FR-A-1 529 333 divulgue un tel appareil. Il s'agit d'une cafetière filtre comportant un réservoir alimenté en eau par un orifice. Cet orifice est pourvu d'une grille de protection. La cafetière comporte un porte-filtre disposé sous l'orifice de remplissage du réservoir.

Le porte-filtre est par ailleurs disposé sous une partie en porte-à-faux du corps de l'appareil qui en protège ainsi l'ouverture supérieure.

Mais la compacité de l'appareil s'en trouve altérée. En hauteur, il faut loger une partie au moins du réservoir à liquide au-dessus du porte-filtre.

Un autre appareil est divulgué dans US 3570390.

Il est ici proposé une solution visant au moins à améliorer la compacité de l'appareil en hauteur.

Un aspect de cette solution prévoit que l'orifice de remplissage du réservoir où est versé le liquide et l'ouverture du porte-filtre sont côte-à-côte et une grille filtrante protège l'accès à l'orifice du réservoir.

Ainsi, en décalant latéralement le haut du réservoir à proximité de l'ouverture du porte-filtre, on réduira la hauteur nécessaire, voire même la compacité latérale, et, avec la grille filtrante, on protégera le réservoir des corps étrangers (petites pièces, poudre de café ...) pouvant y tomber. On préservera ainsi le bon fonctionnment de l'appareil.

De préférence, pour favoriser encore davantage cette compacité latérale, on recommande que l'orifice de remplissage du réservoir soit situé immédiatement au-delà de la périphérie de l'ouverture du porte-filtre et est surmonté de la grille.

Pour parfaire l'efficacité de la protection du réservoir, on recommande en outre, en particulier dans ce cas, que la grille présente un tamis qui retient au moins en partie le produit de préparation de la boisson que l'on place dans ledit filtre.

Pour la protection plus générale de l'appareil sans nuire à la compacité évoquée, on prévoit qu'un couvercle mobile puisse, ouvert, dégager l'accès à l'ouverture du porte-filtre et au réservoir à liquide à travers la grille et, fermé, les recouvrir.

Dans le même but, il est prévu que le couvercle ferme par-dessus une ouverture supérieure de l'appareil au fond de laquelle un creux reçoit le porte-filtre, le sommet de ce creux étant situé en contrebas de parois latérales du corps, le sommet de l'entonnoir et celui de ces parois latérales étant sensiblement de niveau.

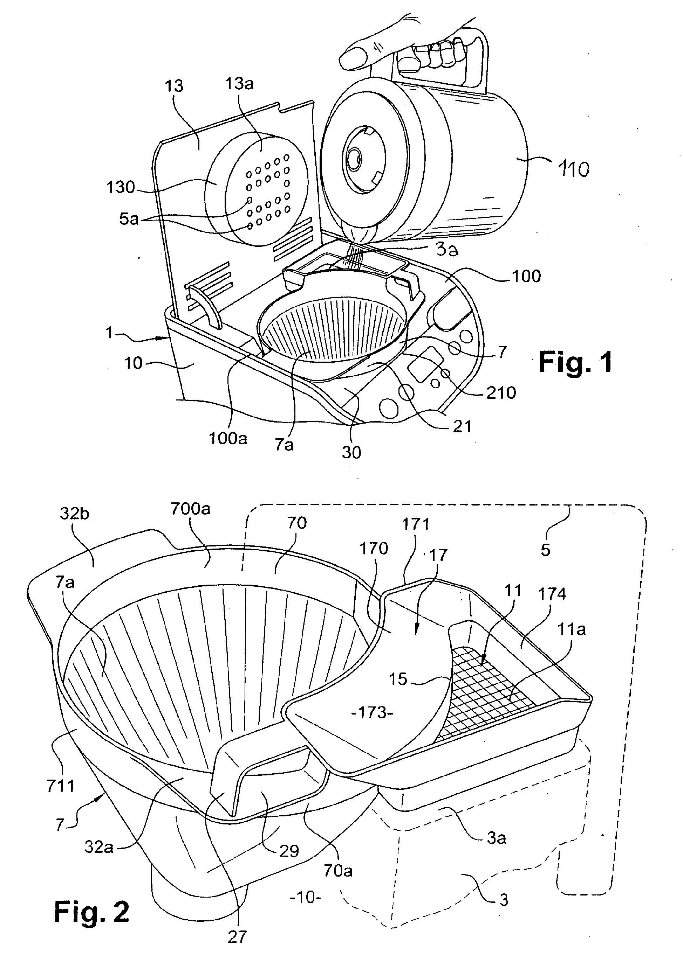

Ainsi, l'opérateur pourra par ailleurs appuyer son pichet rempli de liquide contre le haut de ces parois latérales et de l'entonnoir, en sécurité (voir fig.1).

De façon comparable, en disposant le sommet de l'entonnoir au-dessus de celui du porte-filtre, l'opérateur pourra verser en sécurité en appuyant son pichet rempli de liquide contre le bord en surélévation de l'entonnoir.

De préférence, la grille sera située sensiblement au niveau de la partie supérieure de l'ouverture du porte-filtre. Ainsi, son accès sera aisé, même des orifices de remplissage du réservoir et ouverture du porte-filtre situés en adjacence latérale immédiate. Le contrôle d'encrassement et le nettoyage en seront facilités.

Au sujet de ce nettoyage, il pourra être également être facilité si la grille, l'entonnoir et le porte-filtre sont monoblocs et montés amovibles ensemble sur le corps de l'appareil dans laquelle est situé le réservoir à liquide.

Ce point et/ou une fabrication, voire une maintenance, facilitées sont atteints au moins si la grille est portée par une paroi monobloc avec le porte-filtre.

On recommande aussi, pour une facilité d'emploi et/ou les avantages ci-dessus, que le porte-filtre soit pourvu d'une poignée adjacente à l'entonnoir et présente une ouverture de préhension située en contrebas de son sommet.

Pour éviter que du liquide destiné au réservoir vienne mouiller le produit de préparation de la boisson à un moment non souhaité alors que le réservoir est à remplir, on conseille par ailleurs que la grille soit surmontée d'un entonnoir pour le liquide.

Dans le même but que ci-dessus, et pour tirer avantage des dispositions côte-à-côte précitées, on recommande que de préférence l'entonnoir et le porte-filtre présentent des contre-pentes adjacentes.

Pour favoriser l'efficacité de l'entonnoir, à nouveau sans altérer la compacité latérale, il est conseillé que l'entonnoir présente, sur une portion du pourtour extérieur du porte-filtre, une pente moins pentue et/ou plus longue que d'autres plus extérieures qui le bordent.

Dans les exemples illustrés aux dessins annexés :
- la figure 1 montre un exemple d'appareil, type machine à café filtre, vers sa partie haute, couvercle supérieur ouvert,
- la figure 2 montre une réalisation monobloc de porte-filtre, grille et entonnoir avec une partie adjacente symbolisée du corps de l'appareil, et la figure 3 montre cet ensemble monobloc monté sur le corps de l'appareil.

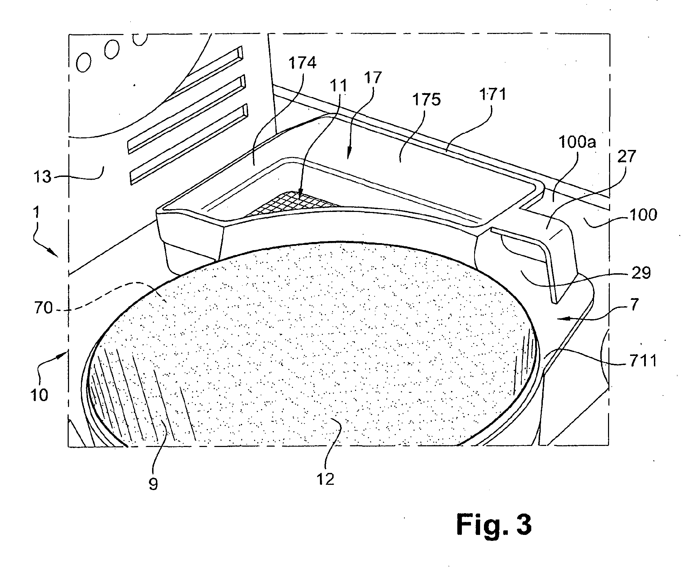

Figures 1, 3, l'appareil électroménager électrique 1 est un appareil de préparation de boisson. Il comporte un réservoir à liquide 3 pourvu d'un orifice 3a de remplissage où (face auquel) est versé le liquide pour la boisson (voir pichet 110 fig.1).

La figure 2 montre que le réservoir à liquide 3 est relié à un conduit 5 apportant (typiquement remontant) le liquide vers l'ouverture 7a d'un porte-filtre creux 7 adapté à recevoir intérieurement un filtre 9 (fig.3). Le tout est logé dans un corps 10 (figs.1,2).

Le filtre est typiquement un entonnoir en papier adapté à la préparation de café filtre dont la poudre sèche est versée dans le filtre. Le porte-filtre sera également typiquement un entonnoir rigide vertical, évasé vers le haut et percé au fond, pour l'évacuation de la boisson réalisée par passage du liquide (typiquement de l'eau) à travers la préparation 12 versée dans le filtre.

Eventuellement, d'autres produits de préparation de boisson, tel du thé, pourraient être placés dans le filtré.

L'orifice 3a de remplissage du réservoir et l'ouverture 7a du porte-filtre sont côte-à-côte et la grille filtrante 11 protège donc l'accès, à l'orifice 3a du réservoir (ouvert vers le haut). Ainsi, l'orifice 3a et l'ouverture 7a sont, comme illustré, immédiatement proches latéralement, donc sensiblement à un même niveau d'élévation.

Par souci de compacité, on voit figure 2 que cet orifice 3a est, latéralement, situé immédiatement au-delà de la périphérie 70a de l'ouverture du porte-filtre et est surmonté de la grille 11.

Pour une protection performante, on recommande que cette grille présente un tamis 11a qui retient au moins en partie le produit 12 de préparation de la boisson que l'on place dans le filtre. Ainsi, on limitera notamment les risques d'encrassement du réservoir 3.

Comme illustré, l'appareil 1 comprendra de préférence un couvercle mobile 13 qui, ouvert, dégagera l'accès à l'ouverture 7a du porte-filtre et à celle du réservoir à liquide 3, via la grille 11 et, fermé, les recouvrira. Le conduit 5 pourra déboucher au-dessus de l'ouverture 7a, à travers des orifices 5a formé dans la paroi inférieure 13a du couvercle. Le conduit 5 sera relié au réservoir 3 et une pompe pourra assurer la circulation du liquide.

Comme illustré, on trouvera avantage à ce que le couvercle 13 ferme par-dessus un espace supérieur ouvert 30 de l'appareil au fond duquel un creux 21 reçoit le porte-filtre 7, le sommet 210 de ce creux étant situé en contrebas de parois latérales 100 du corps 10.

Le couvercle 13 pourra en particulier être monté basculant en haut du corps 10 de l'appareil ; vertical ouvert, horizontal fermé. Et, d'autant plus si, comme illustré, les orifices 13a sont ménagés à l'endroit d'une surépaisseur interne 130 du couvercle, la grille 11 sera favorablement située sensiblement au niveau de la partie supérieure 700a de l'ouverture du porte-filtre. Ceci favorisera notamment une réalisation monobloc entre la grille 11 et le porte-filtre, via une paroi 15 commune.

D'autant avec une telle disposition compacte, et donc cette proximité entre les zones de versement du liquide et de la préparation poudreuse 12, on trouvera utile que la grille 11 soit surmontée d'un entonnoir 17 pour le liquide. Et notamment dans ce cas, le fait que l'entonnoir 17 et le porte-filtre 7 offrent des contre-pentes adjacentes, respectivement 170 et 70, présentera un réel intérêt pour séparer les flux. A ce sujet, on recommande par ailleurs que le sommet ouvert 171 de l'entonnoir soit situé au-dessus de celui 711 du porte-filtre 7, comme on le voit figure 2, et de préférence sensiblement au niveau de celui 100a des parois latérales 100 du corps 3. Là encore, on favorisera la compacité et la bonne utilisation. Et pour favoriser encore ceci, on conseille que l'entonnoir présente, sur une portion du pourtour extérieur du porte-filtre 7 une pente moins pentue et/ou plus longue, 173 que d'autres plus extérieures qui le bordent, telles 174, 175. La pente 173 est ici arrondie, convexe vers en périphérie extérieure du porte-filtre, pour suivre la forme de celui-ci.

Une facilité de fabrication et de nettoyage sera atteinte si la grille 11, l'entonnoir 17 et le porte-filtre 7 sont, comme illustrés, monoblocs et montés amovibles ensemble sur le corps 10 de l'appareil dans laquelle est donc située le réservoir 3 à liquide ; voir ensemble monobloc illustré figure 2.

D'autant plus avec une telle réalisation monobloc, on trouvera avantage à ce que, comme illustré, le porte-filtre 7 soit pourvu d'une poignée 27 adjacente à l'entonnoir 17 et présente une ouverture de préhension 29 située en contrebas de son sommet 171. La poignée 27 longe l'extérieur du porte-filtre.

On aura également remarqué que l'encadrement de la grille 11 s'appuie sur, en la prolongeant de côté, l'une des aillettes latérales 32a, 32b du porte-filtre qui permettent de mieux le tenir lorsqu'on le soulève et qui servent d'appui lorsqu'il est posé sur le haut du corps.

## Revendications

1. Appareil électroménager (1) de préparation de boisson comportant un réservoir à liquide (3) pourvu d'un orifice (3a) de remplissage où est versé le liquide et dont l'accès est protégé par une grille filtrante (11), et relié à un conduit (5) apportant le liquide vers l'ouverture (7a) d'un porte-filtre (7) adapté à recevoir intérieurement un filtre (9) où on place un produit de préparation (12) de la boisson, l'orifice (3a) de remplissage du réservoir (3) et l'ouverture (7a) du porte-filtre (7) étant côte-à-côte,
**caractérisé en ce que** l'appareil électroménager (1) comprend un couvercle mobile (13) qui, ouvert, dégage l'accès à l'ouverture (7a) du porte-filtre (7) et au réservoir à liquide (3) à travers la grille (11) et, fermé, les recouvre, et
**en ce que** la grille (11) est portée par une paroi (15) monobloc avec le porte-filtre (7).

2. Appareil électroménager (1), selon la revendication 1, **caractérisé en ce que** l'orifice (3a) de remplissage du réservoir (3) est situé immédiatement au-delà de la périphérie (70a) de l'ouverture (7a) du porte-filtre (7) et est surmonté de la grille (11).

3. Appareil électroménager (1), selon l'une des revendications précédentes, **caractérisé en ce que** la grille (11) présente un tamis (11a) qui retient au moins en partie le produit de préparation (12) de la boisson que l'on place dans ledit filtre (9).

4. Appareil électroménager (1), selon l'une des revendications précédentes, **caractérisé en ce que** la grille (11) est située sensiblement au niveau de la partie supérieure (700a) de l'ouverture (7a) du porte-filtre (7).

5. Appareil électroménager (1), selon l'une des revendications précédentes, **caractérisé en ce que** la grille (11) est surmontée d'un entonnoir (17, pour le liquide.

6. Appareil électroménager (1), selon la revendication 5, **caractérisé en ce que** l'entonnoir (17) et le porte-filtre (7) présentent des contre-pentes (70 , 170) adjacentes.

7. Appareil électroménager (1), selon la revendication 5 ou 6, **caractérisé en ce que** le sommet (171) de l'entonnoir (17) est situé au-dessus de celui du porte-filtre (7).

8. Appareil électroménager (1), selon l'une des revendications 5 à 7, **caractérisé en ce que** la grille (11), l'entonnoir (17) et le porte-filtre (7) sont monoblocs et montés amovibles ensemble sur le corps (10) de l'appareil (1) dans laquelle est situé le réservoir à liquide (3).

9. Appareil électroménager (1), selon l'une des revendications 1 à 8, **caractérisé en ce que** le couvercle (13) ferme par-dessus une ouverture supérieure (700a) de l'appareil (1) au fond de laquelle un creux (21) reçoit le porte-filtre (7), le sommet (210) de ce creux étant situé en contrebas de parois latérales (100) du corps (10), le sommet (171) de l'entonnoir (17) et celui 711) de ces parois latérales (100) étant sensiblement de niveau.

10. Appareil électroménager (1), l'une des revendications 5 à 9, **caractérisé en ce que** l'entonnoir (17) présente, sur une portion du pourtour extérieur du porte-filtre (7) une pente moins pentue et/ou plus longue (173) que d'autres plus extérieures (174, 175) qui le bordent.

11. Appareil électroménager (1), selon l'une des revendications 8 à 10, **caractérisé en ce que** le porte-filtre (7) est pourvu d'une poignée (27) adjacente à l'entonnoir (17) et présente une ouverture de préhension (29) située en contrebas de son sommet (171).

## Patentansprüche

1. Elektrohaushaltsgerät (1) zur Getränkezubereitung, das einen Flüssigkeitsbehälter (3) umfasst, der mit einer Füllöffnung (3a) versehen ist, in die die Flüssigkeit geschüttet wird, und deren Zugang durch ein Filtergitter (11) geschützt ist, und die mit einer Leitung (5) verbunden ist, die die Flüssigkeit der Öffnung (7a) eines Filterträgers (7) zuführt, der angepasst ist, um innen ein Filter (9) aufzunehmen, in das man ein Zubereitungsprodukt (12) des Getränks platziert, wobei die Füllöffnung (3a) des Behälters (3) und die Öffnung (7a) des Filterträgers (7) nebeneinanderliegen,
**dadurch gekennzeichnet, dass** das Elektrohaushaltsgerät (1) einen beweglichen Deckel (13) umfasst, der im offenen Zustand den Zugang zu der Öffnung (7a) des Filterträgers (7) und zu dem Flüssigkeitsbehälter (3) durch das Gitter (11) freilegt, und sie im geschlossenen Zustand verschließt, und
dass das Gitter (11) von einer Wand (15), die aus einem Teil mit dem Filterträger (7) besteht, getragen wird.

2. Elektrohaushaltsgerät (1) nach Anspruch 1, **dadurch gekennzeichnet, dass** die Füllöffnung (3a) des Behälters (3) unmittelbar über den Umfang (70a) der Öffnung (7a) des Filterträgers (7) hinaus liegt und das Gitter (11) darüber liegt.

3. Elektrohaushaltsgerät (1) nach einem der vorhergehenden Ansprüche, **dadurch gekennzeichnet, dass** das Gitter (11) ein Sieb (11a) aufweist, das das Zubereitungsprodukt (12) des Getränks, das man in das Filter (9) legt, mindestens teilweise zurückhält.

4. Elektrohaushaltsgerät (1) nach einem der vorhergehenden Ansprüche, **dadurch gekennzeichnet, dass** sich das Gitter (11) im Wesentlichen im Bereich des oberen Teils (700a) der Öffnung (7a) des Filterträgers (7) befindet.

5. Elektrohaushaltsgerät (1) nach einem der vorhergehenden Ansprüche, **dadurch gekennzeichnet, dass** über dem Gitter (11) ein Trichter (17) für die Flüssigkeit liegt.

6. Elektrohaushaltsgerät (1) nach Anspruch 5, **dadurch gekennzeichnet, dass** der Trichter (17) und der Filterträger (7) nebeneinander liegende Gegenschrägen (70, 170) aufweisen.

7. Elektrohaushaltsgerät (1) nach Anspruch 5 oder 6, **dadurch gekennzeichnet, dass** der Scheitel (171) des Trichters (17) oberhalb des Scheitels des Filterträgers (7) liegt.

8. Elektrohaushaltsgerät (1) nach einem der Ansprüche 5 bis 7, **dadurch gekennzeichnet, dass** das Gitter (11), der Trichter (17) und der Filterträger (7) aus einem Stück bestehen und gemeinsam abnehmbar auf dem Körper (10) des Geräts (1), in dem sich der Flüssigkeitsbehälter (3) befindet, montiert sind.

9. Elektrohaushaltsgerät (1) nach einem der Ansprüche 1 bis 8, **dadurch gekennzeichnet, dass** der Deckel (13) oberhalb einer oberen Öffnung (700a) des Geräts (1) schließt, in deren Grund ein Hohlraum (21) den Filterträger (7) aufnimmt, wobei der Scheitel (210) dieser Vertiefung unter seitlichen Wänden (100) des Körpers (10) liegt, wobei der Scheitel (171) des Trichters (17) und der (711) dieser seitlichen Wände (100) im Wesentlichen auf demselben Niveau liegen.

10. Elektrohaushaltsgerät (1) nach einem der Ansprüche 5 bis 9, **dadurch gekennzeichnet, dass** der Trichter (17) auf einem Abschnitt des Außenumfangs des Filterträges (7) eine weniger steile Schräge und/oder längere Schräge (173) als andere, die weiter außerhalb liegen (174, 175), die ihn umranden, aufweist.

11. Elektrohaushaltsgerät (1) nach einem der Ansprüche 8 bis 10, **dadurch gekennzeichnet, dass** der Filterträger (7) mit einem Griff (27) versehen ist, der neben dem Trichter (17) liegt und eine Greiföffnung (29) aufweist, die unter seinem Scheitel (171) liegt.

## Claims

1. Electric household appliance (1) for preparing beverages, comprising a tank (3) for a liquid, which is provided with a filling port (3a) in which the liquid is poured and access to which is protected by a filtering grating (11), and which is connected to a channel (5) that supplies the liquid to the opening (7a) of a filter holder (7) suitable for receiving an inner filter (9), into which a material (12) for preparing the drink is placed, the port (3a) for filling the tank (3) and the opening (7a) of the filter holder (7) being arranged side-by-side,
**characterised in that** the electric household appliance (1) includes a mobile cover (13) which, when open, allows access to the opening (7a) of the filter holder (7) and to the liquid tank (3) through the grating (11) and, when closed, covers these, and **in that** the grating (11) is supported by a wall (15) forming a single piece with the filter holder (7).

2. Electric household appliance (1) according to claim 1, **characterised in that** the filling port (3a) of the tank (3) is located immediately beyond the periphery (70a) of the opening (7a) of the filter holder (7) and on top of which is positioned the grating (11).

3. Electric household appliance (1) according to one of the previous claims, **characterised in that** the grating (11) has a sieve (11a) which collects at least part of the drink preparation material (12) placed inside said filter (9).

4. Electric household appliance (1) according to one of the previous claims, **characterised in that** the grating (11) is located substantially at the level of the upper part (700a) of the opening (7a) of the filter holder (7).

5. Electric household appliance (1) according to one of the previous claims, **characterised in that** a funnel (17) for the liquid is located on top of the grating (11).

6. Electric household appliance (1) according to claim 5, **characterised in that** the funnel (17) and the filter holder (7) have adjacent reverse slopes (70, 170).

7. Electric household appliance (1) according to claim 5 or 6, **characterised in that** the tip (171) of the funnel (17) is located above that of the filter holder (7).

8. Electric household appliance (1) according to one of claims 5 to 7, **characterised in that** the grating (11), the funnel (17) and the filter holder (7) are forming a single piece and are mounted such that they can be removed together on the body (10) of the appliance (1) in which the liquid tank (3) is located.

9. Electric household appliance (1) according to one of claims 1 to 8, **characterised in that** the cover (13) closes above an upper opening (700a) of the appliance (1) at the bottom of which a hollow (21) receives the filter holder (7), the tip (210) of this hollow being located at the foot of lateral walls (100) of the body (10), the tip (171) of the funnel (17) and that (711) of these lateral walls (100) being substantially level.

10. Electric household appliance (1) according to one of claims 5 to 9, **characterised in that** the funnel (17) has, on one portion of the outer circumference of the filter holder (7), a less inclined and/or longer slope (173) than other circumferences (174, 175) further outwards bordering it.

11. Electric household appliance (1) according to one of claims 8 to 10, **characterised in that** the filter holder (7) is fitted with a handle (27) adjacent to the funnel (17) and has a gripping aperture (29) located below its tip (171).
